(19) Europäisches Patentamt
European Patent Office
Office européen des brevets

(11) **EP 2 157 301 B1**

(12) **FASCICULE DE BREVET EUROPEEN**

(45) Date de publication et mention
de la délivrance du brevet:
**13.03.2013 Bulletin 2013/11**

(51) Int Cl.:
***F02D 41/34*** *(2006.01)*    ***F02D 41/36*** *(2006.01)*

(21) Numéro de dépôt: **09290598.3**

(22) Date de dépôt: **29.07.2009**

(54) **Procédé de contrôle de combustion d'un moteur à allumage par compression au moyen d'un contrôle du phasage de la combustion**

Verfahren zur Kontrolle der Verbrennung eines Zündmotors durch Verdichtung mit Hilfe einer Steuerung der Verbrennungsphasen

Method for controlling combustion in a diesel engine by means of combustion phasing control

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.08.2008 FR 0804641**

(43) Date de publication de la demande:
**24.02.2010 Bulletin 2010/08**

(73) Titulaire: **IFP Energies nouvelles**
**92852 Rueil-Malmaison Cedex (FR)**

(72) Inventeurs:
  • **Hillion Mathieu**
    **7501 Paris (FR)**
  • **Chauvin Jonathan**
    **92200 Neuilly-sur-Seine (FR)**

(56) Documents cités:
    **EP-A- 0 810 362     US-B1- 6 234 145**

  • **JOHAN BENGTSSON ET AL: "Model Predictive Control of Homogeneous Charge Compression Ignition (HCCI) Engine Dynamics" CONTROL APPLICATIONS, 2006 IEEE INTERNATIONAL CONFERENCE ON, IEEE, PI, 1 octobre 2006 (2006-10-01), pages 1675-1680, XP031011488 ISBN: 978-0-7803-9795-8**

## Description

La présente invention concerne le domaine du contrôle moteur et plus particulièrement le contrôle de combustion des moteurs à allumage par compression, tels que les moteurs diesels ou les moteur CAI (« *Controlled Auto Ignition* »).

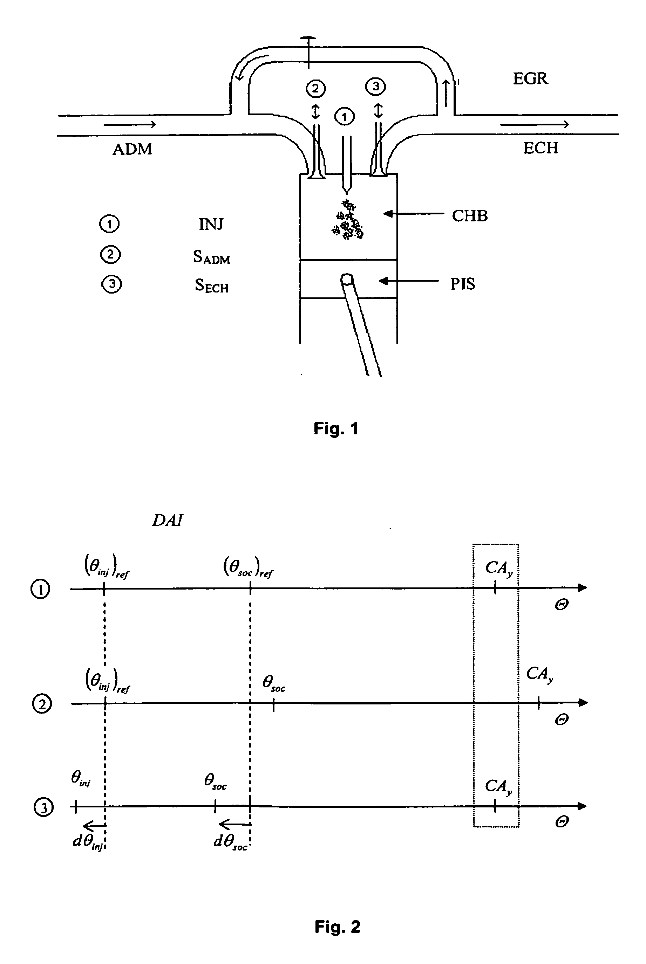

Le fonctionnement du moteur diesel est basé sur l'auto inflammation d'un mélange d'air, de gaz brûlés et de carburant. Le cycle du moteur se décompose en plusieurs phases (figure 1) :

- Lors de l'admission (*ADM*), la soupape d'admission ($S_{ADM}$) laisse entrer dans la chambre (*CHB*) le mélange d'air et de gaz brûlés. L'air est prélevé dans l'environnement extérieur du moteur. Les gaz brûlés sont prélevés dans la tubulure d'échappement (*ECH*) et ramené vers la tubulure d'admission (re-circulation de gaz brûlés EGR). Ce mélange gazeux rempli la chambre de combustion (*CHB*) et se mélange avec les gaz brûlés restés dans la chambre depuis la précédente combustion (EGR interne).

- La soupape d'admission se ferme (IVC : *intake valve closing*). Le piston (*PIS*) comprime les gaz.

- L'injecteur de carburant (*INJ*) injecte une masse précise de carburant. Après un bref délai d'auto inflammation, le mélange air, gaz brûlés, carburant s'enflamme créant ainsi une surpression qui repousse le piston.

- Une fois le piston redescendu, la soupape d'échappement ($S_{ECH}$) s'ouvre, le mélange gazeux est alors évacué par la tubulure d'échappement. Après la fermeture de la soupape d'échappement, il reste une partie des gaz dans le cylindre (EGR interne). Les gaz évacués par la tubulure d'échappement sont divisés en deux. Une partie re-circule vers l'admission (EGR) tandis que le reste est évacué hors du moteur (via l'échappement).

Le but du contrôle moteur est de garantir au conducteur le couple qu'il demande tout en minimisant le bruit et les émissions de polluants. Il faut donc régler aussi finement que possible le pilotage des quantités des différents gaz et du carburant.

### État de la technique

Pour réaliser un contrôle de combustion d'un moteur à allumage par compression, on connaît des méthodes permettant de déterminer le milieu de combustion à l'aide de capteurs montés sur le moteur. Le plus précis étant d'utiliser un capteur de pression dans la chambre de combustion. Une telle méthode est décrite par exemple dans le document suivant :

J. Bengtsson, P. Strandh, R. Johansson, P. Tunestal and B. Johansson, "Control of Homogeneous Charge Compression Ignition (HCCI) Engine Dynamics", Proceeding of the 2004 American Control Conference, Boston, June 30 - July 2, 2004

Cependant l'utilisation de tels capteurs sur des véhicules de série n'est pas envisageable du fait du coût très important de tels capteurs. De plus, ces capteurs sont généralement sujets à des dérives relativement rapides.

On connaît également des méthodes dans lesquelles les quantités et les phasages sont optimisés sur chaque point de fonctionnement statique (régime et couple) de manière à dégager une stratégie idéale à chaque point. On utilise donc un calibrage sur banc moteur pour dégager les valeurs optimales des deux jeux de données principaux :

- les masses d'air $M_{air}$ et de gaz brûlés $M_{gb}$ nécessaire dans la chambre de combustion, qu'on représentera par $X_{air}$ = ($M_{air}$, $M_{gb}$).

- La masse de carburant $M_f$ ainsi que l'angle vilebrequin $0_f$ auquel le carburant est injecté, qu'on représentera par $X_{fuel} = (M_f, 0_f)$.

On connaît également le procédé décrit dans le document suivant :

J. Bengtsson et al., "Model Predictive Control of Homogeneous Charge Compression Ignition (HCCI) Engine Dynamics", Control Applications, 2006 IEEE International Conference on, IEEE, PI, 1 octobre 2006, Pages 1675-1680

Il s'agît d'un procédé de contrôle de combustion se basant aussi sur des capteurs placés dans la chambre de combustion, et dans lequel l'angle $C4_{50}$ est contrôlé via une modification de l'angle vilebrequin auquel le carburant doit être injecté, au moyen d'un modèle non linéaire.

Cependant ces stratégies se révèlent insuffisantes dans les phases transitoires. En effet, lors des phases de transition d'un point de fonctionnement à un autre (changement de vitesse du véhicule ou du profil de la route), le contrôle moteur supervise les différents actionneurs présents dans le moteur pour garantir le couple désiré tout en minimisant le bruit, les émissions de polluants et la consommation. Cela se traduit donc par le passage des valeurs des paramètres du point initial aux valeurs des paramètres du point final :

$$\begin{cases} X_{air}^{initial} \rightarrow X_{air}^{final} & (a) \\ X_{fuel}^{initial} \rightarrow X_{fuel}^{final} & (b) \end{cases}$$

Or, il existe dans le moteur deux échelles de temps. La plus rapide (50 Hz) correspond à l'ensemble du phénomène de combustion (1 cycle moteur). A cette échelle, on est capable de changer la stratégie de l'injection ($X_{fuel}$) pour piloter la combustion. C'est la boucle de fuel. (Cf. (*b*)). La plus lente (1 Hz) correspond à la dynamique des gaz dans les tubulures du moteur (admission, échappement, re-circulation de gaz brûlés). On ne peut changer plus vite la stratégie de cette boucle d'air ($X_{air}$). (Cf. (*a*))

Avec les méthodes actuelles, les variables pilotées ($X_{air}$, $X_{fuel}$) n'arrivent donc pas en même temps à leurs valeurs de consigne à cause de cette différence de dynamique. Les objectifs en production de couple, consommation, polluants, bruit sont donc respectés dans les phases statiques (les deux boucles dynamiques sont stabilisées à leurs valeurs de référence), en revanche, si on ne prend pas de précaution dans les phases transitoires, une partie des paramètres atteignant presque instantanément sa valeur de consigne finale alors que l'autre partie est encore aux valeurs de consigne initiale, le moteur produit alors plus de polluants ou de bruit, et peut même dans certain cas s'éteindre.

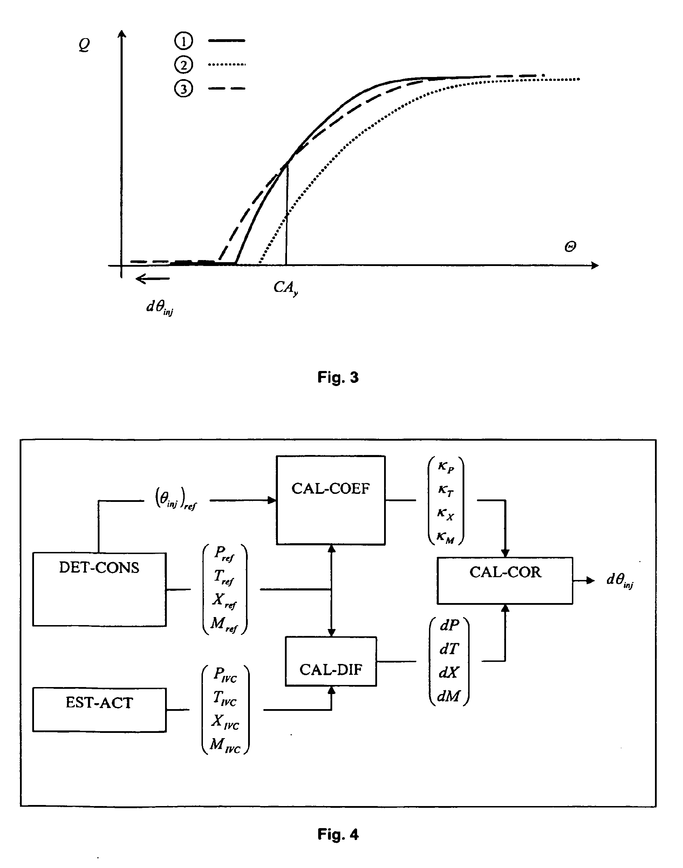

De plus, sans capteurs de pressions cylindre, les méthodes connues ne permettent pas de contrôler le phasage de la combustion pendant les phases transitoires. Or comme l'illustre les figures 2 et 3, ceci est insuffisant pour assurer le fonctionnement du moteur en transitoire.

L'objet de l'invention concerne un procédé pour assurer le contrôle de la combustion d'un moteur à allumage par compression, notamment en phase transitoire, tout en s'affranchissant des problèmes de l'art antérieur. Le procédé y parvient, d'une part en contrôlant les deux boucles dynamiques de manière séparée, et d'autre part en corrigeant la valeur de référence de l'angle d'injection via un contrôle de l'angle *CAy*.

### Le procédé selon l'invention

Ainsi, l'invention concerne un procédé de contrôle de combustion d'un moteur à allumage par compression, dans lequel : - on détermine des valeurs de consigne de paramètres physiques liés à l'admission de comburant gazeux dans une chambre de combustion, ainsi qu'une valeur de consigne $(\theta_{inj})_{ref}$ d'un angle vilebrequin auquel un carburant doit être injecté dans la chambre de combustion, lesdites valeurs de consigne étant déterminées de façon à optimiser la combustion, - un système de contrôle moteur pilote des actionneurs de façon à ce que les valeurs desdits paramètres physiques soient égales auxdites valeurs de consigne. Le procédé comporte les étapes suivantes :

- on corrige la valeur de consigne $(\theta_{inj})_{ref}$ avant que les paramètres physiques n'atteignent leurs valeurs de consigne, en calculant une correction $d\theta_{inj}$ à appliquer à la valeur de consigne $(\theta_{inj})_{ref}$, de façon à ce qu'un angle vilebrequin $CA_y$, auquel *y* pour cent du carburant est consommé lors de la combustion, soit égale à une valeur de référence de cet angle pour une combustion optimisée ;

- le système de contrôle moteur pilote une injection de carburant dans la chambre de combustion lorsque l'angle vilebrequin est égal à la valeur corrigée de consigne $(\theta_{inj})_{ref}$ afin de conserver la combustion optimale.

Selon un mode de réalisation, on détermine la correction $d\theta_{inj}$ en tenant compte des différences entre des valeurs réelles des paramètres physiques et les valeurs de consignes des paramètres physiques, et en contrôlant l'angle vilebrequin $CA_y$ au moyen d'une modélisation de la combustion comportant un premier modèle pour modéliser un phénomène d'auto inflammation, et un second modèle pour modéliser un dégagement d'énergie en fonction de l'angle vilebrequin $CA_y$. On peut alors déterminer la correction $d\theta_{inj}$ en appliquant les étapes suivantes :

- on détermine les valeurs réelles des paramètres physiques ;

- on calcule les différences entre les valeurs réelles et les valeurs de consignes ;

3

- on calcule des premiers coefficients de linéarisation en linéarisant au premier ordre le premier modèle ;

- on calcule des seconds coefficients de linéarisation en linéarisant au premier ordre le second modèle, et en considérant que l'angle vilebrequin $CA_y$ est égale à sa valeur de référence ; et

- on calcule la correction $d\theta_{inj}$ au moyen d'une combinaison linéaire des différences, les coefficients de cette combinaison linéaire étant définis à partir des premiers et seconds coefficients de linéarisation.

Selon l'invention, les paramètres physiques peuvent être choisis parmi au moins les paramètres suivants au moment de la fermeture soupape : pression dans la chambre de combustion ($P_{IVC}$), température dans la chambre de combustion ($T_{IVC}$), rapport ($X_{IVC}$) entre une masse de gaz brûlés et une masse de gaz totale dans la chambre de combustion, et masse ($M_{IVC}$) de gaz totale dans le cylindre.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

- la figure 1 montre les différentes phases d'un cycle de combustion d'un moteur à allumage par compression.

- la figure 2 illustre une chronologie de combustion, en fonction de l'angle vilebrequin selon trois situations de contrôle de combustion : contrôle optimal (réalisé en phase stabilisée), contrôle actuel en phase transitoire sans contrôle du $CA_y$ et contrôle souhaité en phase transitoire avec contrôle du $CA_y$.

- la figure 3 illustre les trois courbes de dégagement d'énergie Q en fonction de l'angle vilebrequin $\theta$ pour les trois situations décrites en figure 2.

- la figure 4 illustre un schéma de calcul de la correction $d\theta_{inj}$ de l'angle d'injection du carburant.

**Description détaillée du procédé**

Le procédé selon l'invention permet de contrôler le déroulement de la combustion d'un moteur à allumage par compression, en phase statique comme en phase transitoire. Il comporte un contrôle séparé et indépendant de la boucle d'air (boucle lente) et de la boucle de fuel (boucle rapide), puis une adaptation de la dynamique de la boucle de fuel de manière à être cohérent avec la boucle d'air. Le procédé permet ainsi une adaptation de $X_{fuel}$ pour conserver les caractéristiques de la combustion demandée (à travers la demande de couple du conducteur). On limite ainsi l'impact sur les émissions de polluants et de bruit tout en garantissant au conducteur le couple demandé.

Selon ce procédé, le contrôle de la combustion d'un moteur à allumage par compression s'effectue en quatre étapes :

1- Détermination de valeurs de consigne pour différents paramètres Physiques.

Lors des phases de transition d'un point de fonctionnement à un autre (changement de vitesse du véhicule ou du profil de la route), le contrôle moteur supervise les différents actionneurs présents dans le moteur pour garantir le couple désiré tout en minimisant le bruit, les émissions de polluants et la consommation. Cela se traduit donc par le passage des valeurs des paramètres $X_{air}$ et $X_{fuel}$ d'un point initial aux valeurs des paramètres d'un point final:

$$\begin{cases} X_{air}^{initial} \rightarrow X_{air}^{final} & (a) \\ X_{fuel}^{initial} \rightarrow X_{fuel}^{final} & (b) \end{cases}$$

Les valeurs finales sont définies de façon à optimiser la combustion, c'est-à-dire à brûler le maximum de carburant de façon à minimiser les émissions de polluants et la consommation tout en minimisant le bruit. Ces valeurs finales optimisant la combustion sont appelées valeurs de consigne. Le contrôle moteur est chargé de faire respecter ses valeurs consignes.

Les paramètres physiques importants régulés par la boucle d'air qu'il faut connaître sont la pression, la température et la composition chimique des gaz dans la chambre. Idéalement, ces paramètres atteignent instantanément leur valeur consigne. En réalité, la lenteur de la boucle d'air fait qu'il existe une erreur sur ces paramètres $X_{air}$ entre leur valeur de consigne et leur valeur réelle pendant toute la phase de transition. En conséquence, les paramètres thermodynamiques (masse, pression, température et taux de gaz brûlés) de la charge gazeuse aspirée dans le cylindre sont différents de leur valeur de consigne. On adapte le contrôle de la boucle de fuel aux erreurs des paramètres suivants:

- $P$ : La pression dans la chambre de combustion. Elle est fonction de l'angle vilebrequin θ.

- $T$ : La température dans la chambre de combustion. Elle est fonction de l'angle vilebrequin θ.

- $X$ : Le rapport entre la masse de gaz brûlés et la masse de gaz totale dans la chambre de combustion (paramètre entre 0 et 1). Ce taux n'évolue pas pendant tout le cycle et est donc égal au taux de gaz brûlés au moment où on ferme la soupape d'admission.

- $M$ : La masse totale de gaz (air + gaz brûlés) enfermée dans le cylindre. La masse étant conservée, ce paramètre est constant.

On distingue dans notre analyse la valeur de ces paramètres au moment de la fermeture soupape (IVC):

- $P_{IVC}$ : La pression dans la chambre de combustion au moment de la fermeture soupape.

- $T_{IVC}$ : La température dans la chambre de combustion au moment de la fermeture soupape.

- $X_{IVC}$ : Le rapport entre la masse de gaz brûlé et la masse de gaz totale dans la chambre de combustion au moment de la fermeture soupape.

- $M_{IVC}$ : La masse de gaz totale (air + gaz brûlés) dans le cylindre.

Les valeurs de ces quatre paramètres sont déterminées en continue. Pour ce faire, nous supposons que la composition ($X_{IVC}$) et la pression ($P_{IVC}$) dans le cylindre à l'ivc sont les même que celles dans le collecteur d'admission où l'on dispose de mesures (par des capteurs ou des estimateurs). Nous estimons $T_{IVC}$ par la loi des gaz parfait

$$T_{IVC} = \frac{P_{IVC} V_{IVC}}{R M_{IVC}}$$ où R est la constante des gaz parfait (R=287) et $M_{IVC}$ est la masse aspirée par le cylindre qui est mesurée par un débitmètre. Pour ces quatre paramètres physiques liés à l'admission de comburant gazeux dans la chambre de combustion du moteur, les valeurs de consigne sont respectivement notées : $P_{ref}, T_{ref}$ et $X_{ref}$ et $M_{ref}$.

Ces valeurs de consignes sont obtenues à partir d'une cartographie de consigne établie sur banc moteur : les valeurs de consigne de ces paramètres sont données par le point optimal cartographié au banc moteur (valeur que ces paramètres doivent atteindre). Ces valeurs de consigne sont déterminées de façon à optimiser la combustion.

La valeur référence de ces paramètres, donnée par le point optimal cartographié au banc moteur (valeur que ces paramètres doivent atteindre) :

- $P_{ref}$ : La pression référence dans la chambre de combustion au moment de la fermeture soupape (obtenu pour le point optimal de référence).

- $T_{ref}$ : La température référence dans la chambre de combustion au moment de la fermeture soupape (obtenu pour le point optimal de référence).

- $X_{ref}$ : La valeur référence du rapport entre la masse de gaz brûlé et la masse de gaz totale dans la chambre de combustion au moment de la fermeture soupape (obtenu pour le point optimal de référence).

- $M_{ref}$ : La valeur référence de la masse de gaz enfermée dans le cylindre (obtenu pour le point optimal de référence).

Ces paramètres sont liés par la relation des gaz parfait (PV=MRT) mais pour des raisons de simplicité, on n'explicite pas directement cette relation. Cela n'affecte en rien la méthode proposée.

Selon l'invention, le paramètre de la stratégie de fuel important pour adapter la boucle de fuel est l'angle

vilebrequin, noté $\theta_{inj}$, pour lequel du carburant est injecté. On note $\theta_{inj}^{ref}$ sa valeur de consigne. Cette valeur est également donnée par le point optimal cartographié au banc moteur. Elle correspond aux valeurs de consigne $P_{ref}$, $T_{ref}$, $X_{ref}$ et $M_{ref}$.

2- Contrôle de la boucle d'air (boucle lente).

Une fois déterminées les valeurs de consigne $P_{ref}$, $T_{ref}$, $X_{ref}$ et $M_{ref}$, un système de contrôle moteur pilote des actionneurs de façon à ce que les valeurs des paramètres physiques $P_{IVC}$, $T_{IVC}$ et $X_{IVC}$ et $M_{IVC}$ soient égales à ces valeurs de consigne ($P_{ref}$, $T_{ref}$, $X_{ref}$, $M_{ref}$).

Idéalement, les quatre paramètres $P_{IVC}$, $T_{IVC}$ et $X_{IVC}$ et $M_{IVC}$ atteignent instantanément leurs valeurs de consigne $P_{ref}$, $T_{ref}$, $X_{ref}$ et $M_{ref}$. En réalité, la lenteur de la boucle d'air fait qu'il existe une erreur sur ces paramètres entre la consigne et leur valeur réelle pendant toute la phase de transition. On adapte donc la boucle de fuel aux erreurs des ces paramètres. Pour ce faire on adapte la valeur de consigne $(\theta_{inj})_{ref}$ de l'angle d'injection.

3- Correction de la valeur de consigne de l'angle d'injection $(\theta_{inj})_{ref}$.

Si le contrôle de la boucle d'air était parfait, les quatre paramètres $P_{IVC}$, $T_{IVC}$, $M_{IVC}$ et $X_{IVC}$ atteindraient leurs valeurs références $P_{ref}$, $T_{ref}$, $M_{ref}$ et $X_{ref}$ instantanément. En réalité, on ne peut rendre la boucle d'air aussi rapide que désiré. En phase transitoire, les paramètres $P_{IVC}$, $T_{IVC}$, $M_{IVC}$ et $X_{IVC}$ sont donc différents de leur valeur référence. Le contenu du cylindre au moment de la fermeture soupape est donc différent du contenu référence pour lequel a été cartographié la stratégie d'injection.

Il faut donc prendre en compte les erreurs de ces paramètres au moment de la fermeture soupape (dP = $P_{IVC}$ - $P_{ref}$), (dT=$T_{IVC}$ - $T_{ref}$), (dM=$M_{IVC}$ - $M_{ref}$) et (dX = $X_{IVC}$ - $X_{ref}$) pour modifier l'angle d'injection de fuel de manière à conserver une combustion aussi proche que la combustion référence.

Selon l'invention, on contrôle le phasage de la combustion, en contrôlant l'angle $CA_y$, qui correspond à l'angle vilebrequin auquel y% du carburant a été consommé par la combustion. Dans toute la suite, $y$ est donc un réel quelconque entre 0 et 100. (y=0 correspond à un contrôle de début de combustion).

Pour cela, on cherche un nouvel angle d'injection corrigé $(\theta_{inj})_{ref}$ +$d\theta_{inj}$ pour que l'angle $CA_y$ soit à sa valeur de référence ($d_{CA_y} = CA_y - (CA_y)_{ref} = 0$). On cherche donc $d\theta_{inj}$ tel que (voir figures 2 et 3 pour les situations):

- si il n'y a pas d'erreur, c'est-à-dire si tous les paramètres ont atteint leur valeur de référence (($dP,dT,dM,dX$) = (0,0,0,0)), on est exactement dans la situation du point de fonctionnement référence, on a donc $d\theta_{inj}$= 0 (situation ①).

- Si les paramètres n'ont pas atteint leur valeur de référence (($dP,dT,dM,dX$) ≠ (0,0,0,0)), la durée du délai d'auto inflammation et la vitesse de la combustion ne seront pas identique à celles de la combustion référence. On a donc un déphasage de tout le processus de combustion et le $CA_y$ n'est pas atteint à sa valeur référence (situation ②).

- Pour contrebalancer les erreurs ($dP, dT, dM, dX$) ≠ (0,0,0,0), on introduit donc une correction angulaire $d\theta_{inj}$ ≠ 0 sur l'angle d'injection pour avoir le même phasage $CA_y$. La correction $d\theta_{inj}$ ≠ 0 va aussi entraîner un décalage de l'angle de début de combustion. L'angle de début de combustion devient alors $(\theta_{soc})_{ref}$ + $d\theta_{soc}$ (situation ③).

La figure 2 illustre une chronologie de combustion selon trois situations. Pour chaque situation l'axe horizontal représente l'angle vilebrequin $\theta$. Sur ces axes sont repérés : la valeur de consigne $(\theta_{inj})_{ref}$ de l'angle d'injection, la valeur de consigne $(\theta_{soc})_{ref}$ de l'angle de combustion, l'angle $CA_y$, la valeur effective $(\theta_{soc})$ de l'angle de combustion ; la valeur effective de l'angle d'injection. On note également le délai d'auto inflammation ($DAI$) qui est compris entre $(\theta_{inj})_{ref}$ et $(\theta_{soc})_{ref}$, et la combustion se produit à partir de $(\theta_{soc})_{ref}$.

La figure 3 illustre les trois courbes de dégagement d'énergie Q en fonction de l'angle vilebrequin $\theta$ pour les trois situations décrites précédemment (figure 2).

On réalise ensuite une modélisation du système de combustion. Selon l'invention, cette modélisation comporte deux modèles : l'un permet de modéliser le phénomène d'auto inflammation, le second permet de modéliser le dégagement d'énergie.

Selon un exemple particulier de réalisation, on peut utiliser les modèles décrits ci-après.

*Modèle d'auto inflammation*

Pour ce faire on se base dans un premier temps sur le modèle de « l'intégrale de Knock ». Ce modèle est décrit dans le document suivant :

K. Swan, M.Shahbakhti and C.R. Koch, "Predicting Start of Combustion Using a modified Knock Integral Method for an HCCI Engine", in Proc. Of SAE Conference, 2006.

Il est important de noter que la méthode de synthèse du contrôleur d'angle d'injection proposée est applicable à tout modèle de délai d'auto inflammation présentant la même forme intégrale que celui de Swan et al.

Selon ce modèle, le début de la combustion ne se fait pas immédiatement après l'injection de fuel. Il y a un délai d'auto inflammation qui se modélise sous la forme de l'intégrale de Knock. Celui-ci permet, à partir des valeurs des paramètres $P, T, X$ et $\theta_{inj}$, de déterminer l'angle de début de combustion $\theta_{soc}$ :

$$\int_{\theta_{inj}}^{\theta_{soc}} g(P(\theta), T(\theta), X, N_e) \, d\theta = 1$$

avec :

$$- \quad g(P, T, X, N_e) = \frac{1}{6 N_e} \frac{A}{C_1 + C_2 X} . P^n . \exp\left(\frac{T_A}{T}\right)$$

- $A$, $C_1$, $C_2$, $n$ et $T_A$ sont des paramètres physiques fixes à calibrer.

- $N_e$ est le régime moteur. Classiquement, celui-ci est considéré constant. (Cette hypothèse étant justifié par le fait que les variations de régimes sont beaucoup plus lentes que les variations des autres paramètres considérés).

- $\theta$ est l'angle du vilebrequin.

Puis, on considère qu'avant le début de la combustion, le mélange de gaz est en compression adiabatique. On peut donc ramener facilement la connaissance de $P(\theta)$, $T(\theta)$ à celle de $P_{IVC}$, $T_{IVC}$ et du volume de la chambre $V(\theta)$, celui-ci étant parfaitement connu. De plus, le taux de gaz brûlés n'évolue pas tout au long de la phase de compression sans combustion $X(\theta) = X_{IVC}$. On peut donc ramener l'intégrale de Knock à l'intégrale suivante :

$$\int_{\theta_{inj}}^{\theta_{soc}} f(P_{IVC}, T_{IVC}, X_{IVC}, N_e, \theta) \, d\theta = 1$$

Avec f une fonction entièrement connue est définie à l'annexe 3.

*Modèle de dégagement d'énergie*

Pour contrôler l'ensemble du déroulement de la combustion, via l'angle $CA_y$, et non seulement le début de la combustion, il est nécessaire de considérer un modèle de dégagement d'énergie.

On peut utiliser le modèle de dégagement d'énergie Diesel de Chmela (F.G. Chmela and G.C. Orthaber, "Rate of Heat Release Prediction for Direct Injection Diesel Engines Based on Purely Mixing Controlled Combustion", in Proc. Of SAE Conference, 1999). Ce modèle donne le dégagement d'énergie lié à la combustion Diesel sous la forme d'une équation différentielle:

$$\frac{dQ}{d\theta} = C_{mode}\left(M_f - \frac{Q}{Q_{LHV}}\right) \exp\left(C_{rate} \frac{\sqrt{k(\theta)}}{\sqrt[3]{V_{cyl}(\theta)}}\right)$$

avec :

- $M_f$ est la masse de fuel totale injectée.

- $Q_{LHV}$ est l'énergie massique disponible dans le carburant.

- Q est l'énergie libérée par la combustion

- $V_{cyl}(\theta)$ est le volume du cylindre.

- $k(\theta)$ est la densité d'énergie cinétique turbulente présente dans le cylindre.
  Elle satisfait une certaine équation différentielle présentée en annexe 4.

- $C_{\mathrm{mod}\,e}$ et $C_{rate}$ sont deux constantes.

- $N_e$ le régime moteur.

On apporte une modification à ce modèle, afin de prendre en compte la présence de gaz brûlés re-circulés dans la chambre de combustion. Pour cela, on ajoute un terme en fonction du taux de gaz brûlé $X_{IVC}$ présent avant la combustion sous la forme:

$$\frac{dQ}{d\theta} = C_{\mathrm{mod}\,e}\left(M_f - \frac{Q}{Q_{LHV}}\right)\exp\left(C_{rate}\,\frac{\sqrt{k(\theta)}}{\sqrt[3]{V_{cyl}(\theta)}}\right)h(X_{IVC}) \qquad (1)$$

avec :

- h une fonction dérivable connue.

Il est important de noter que la méthode de synthèse proposée est indépendante de la forme de la fonction $h$. La fonction la plus communément utilisée étant $h(X_{IVc}) = (1- X_{IVC})\beta$ où $\beta$ est une constante.

Exemple de jeu de paramètre

| Paramètre | β |
|:---:|:---:|
| Unité | [1] |
| Valeur | 0.5 |

On considère:

- que toute la masse de fuel a été injectée avant le début de combustion. Le paramètre $M_f$ de l'équation différentielle (1) est donc constant, égal à la masse totale de carburant injectée.

- qu'on a une expression pour la densité d'énergie cinétique turbulente en fonction de l'angle vilebrequin $\theta$ est des masses $M_{IVC}$, $M_f$ et de l'angle d'injection de fuel $\theta_{inj}$ sous la forme (voir annexe 4)

$$k(\theta, \theta_{inj}, M_f, M_{IVC}, N_e) = C_{turb}\,\frac{k_0(M_f, N_e)}{M_{IVC} + M_f}\,e^{-\frac{C_{diss}}{6N_e}(\theta - \theta_{inj})}$$

avec : $C_{diss}$ une constante et $k_0(M_f, N_e)$ fonction connue qui est fixée par la forme du profil du débit de carburant (donné par les caractéristiques techniques du système d'injection).

On peut transformer l'équation (1) pour faire apparaître la fraction de masse de fuel consommée par la réaction (x ∈ [0,1]) et l'angle $CA_y$ (voir annexe 5):

$$\int_{\theta_{soc}}^{CA_y} \frac{C_{mod\,e}}{Q_{LHV}} \exp\left(C_{rate}\frac{\sqrt{k(\theta,\theta_{inj},M_f,M_{IVC},N_e)}}{\sqrt[3]{V_{cyl}(\theta)}}\right)h(X_{IVC})d\theta = \int_0^{\frac{y}{100}}\frac{dx}{(1-x)} = -\ln(1-\frac{y}{100})$$

$$(2)$$

*Estimation de la correction de la valeur de consigne de l'angle d'injection* $(\theta_{inj})_{ref}$

Le calcul de la correction se fait en deux étapes identiques appliquées aux deux modèles (auto inflammation et dégagement d'énergie). On linéarise les modèles en $P_{IVC}, T_{IVC}, M_{IVC}, X_{IVC}, \theta_{inj}$ et $\theta_{soc}$ aux alentours de leurs valeurs références en introduisant des écarts $dP, dT, dM, dX, d\theta_{inj}$ et $d\theta_{soc}$. De cette manière on obtient deux équations permettant d'obtenir $d\theta_{inj}$ en fonction des erreurs de la boucle d'air $dP, dT, dM, dX$.

Première étape:

En linéarisant l'intégrale de Knock au premier ordre, on peut simplement lier la correction $d\theta_{inj}$ à la variation d'angle de début de combustion $d\theta_{soc}$ (on fait de ce fait l'hypothèse de petites perturbations suivante : $d\theta_{inj} << \theta_{inj}, dP << P_{ref}, dT << T_{ref}$ et $dX << X_{ref}$). Pour ce faire, on considère l'équation du délai d'autoinflammation $\int_{\theta_{inj}}^{\theta_{soc}} f(P_{IVC}, T_{IVC}, X_{IVC}, N_e, \theta)\,d\theta = 1$ comme une équation implicite en $(P_{IVC}, T_{IVC}, X_{IVC}, \theta_{inj}$ et $\theta_{soc})$ qu'on linéarise autour des valeurs $(P_{ref}, T_{ref}, X_{ref}, (\theta_{inj})_{ref}, (\theta_{soc})_{ref})$ ce qui permet d'introduire les écarts $(dP, dT, dX, d\theta_{inj}$ et $d\theta_{soc})$. On arrive alors à une équation de la forme:

$$d\theta_{soc} = \alpha_{inj}d\theta_{inj} + \alpha_P dP + \alpha_T dT + \alpha_X dX \qquad (3)$$

Les coefficients de linéarisation $\alpha_{inj}, \alpha_P, \alpha_T$ et $\alpha_X$ représentent donc les influences respectives des erreurs $dP, dT, dX$ et de $d\theta_{inj}$ sur le décalage du début de combustion $d\theta_{soc}$. Leurs expressions sont données en annexe 1.

Deuxième étape:

On considère de même l'équation (2) comme une équation implicite en $(M_{IVC}, X_{IVC}, \theta_{inj}$ et $\theta_{soc})$. On la linéarise autour de $(P_{ref}, T_{ref}, M_{ref}, X_{ref}, (\theta_{inj})_{ref}$ et $(\theta_{soc})_{ref})$ ce qui permet d'introduire les écarts $(dM, dX, d\theta_{inj}$ et $d\theta_{soc})$ (on fait de ce fait l'hypothèse de petites perturbations suivante : $d\theta_{inj} << \theta_{inj}, dM << M_{ref}, dX << X_{ref}$ et $d\theta_{soc} << \theta_{soc})$, on obtient la relation suivante:

$$\beta_{CA_y}d\theta_{CA_y} + \beta_{inj}d\theta_{inj} + \beta_M dM + \beta_X dX + \beta_{soc}d\theta_{soc} = 0$$

Selon l'invention, on corrige l'angle d'injection via un contrôle du $CA_y$. Cela se traduit par la condition : $d_{CA_y} = CA_y - (CA_y)_{ref} = 0$ (l'angle $CA_y$ est à sa valeur de référence).

Ainsi, on utilise la relation (4) suivante :

$$\beta_{inj}d\theta_{inj} + \beta_M dM + \beta_X dX + \beta_{soc}d\theta_{soc} = 0 \qquad (4)$$

Les coefficients de linéarisation $\beta_{inj}, \beta_M, \beta_X, \beta_{soc}$ représentent les influences respectives des erreurs $dM, dX$ et des décalages $d\theta_{soc}$ et $d\theta_{inj}$ pour conserver le même angle $CA_y$ lors de la combustion. Leurs expressions sont données en annexe 2. Ces expressions font appel à la valeur de référence du $CA_y$ : $(CA_y)_{ref}$. Pour obtenir cette valeur on peut soit utiliser une cartographie, soit utiliser les modèles d'auto inflammation et de dégagement d'énergie dans lesquels on utilise les valeurs de références $P_{ref}$, $T_{ref}$, $M_{ref}$, $X_{ref}$ et $(\theta_{inj})_{ref}$. Le modèle d'auto inflammation permet alors d'obtenir $(\theta_{soc})_{ref}$, et le modèle d'auto inflammation permet de déterminer $(CA_y)_{ref}$.

Avec les équations (3) et (4) on obtient que la correction à appliquer est la suivante:

$$d\theta_{inj} = \kappa_P dP + \kappa_X dX + \kappa_M dM + \kappa_T dT$$

$$\text{avec} \begin{cases} \kappa_P = -\dfrac{\beta_{soc}\alpha_P}{\beta_{inj} + \beta_{soc}\alpha_{inj}} \\[2mm] \kappa_X = -\dfrac{\beta_{soc}\alpha_X + \beta_X}{\beta_{inj} + \beta_{soc}\alpha_{inj}} \\[2mm] \kappa_M = -\dfrac{\beta_M}{\beta_{inj} + \beta_{soc}\alpha_{inj}} \\[2mm] \kappa_T = -\dfrac{\beta_{soc}\alpha_T}{\beta_{inj} + \beta_{soc}\alpha_{inj}} \end{cases}$$

4- Adaptation de la boucle de fuel (boucle rapide).

Le système de contrôle moteur pilote le système d'injection du carburant dans la chambre de combustion lorsque l'angle vilebrequin est égal à la valeur corrigée de consigne $(\theta_{inj})_{ref} + d\theta_{inj}$ afin de conserver la combustion optimale.

Un intérêt de la méthode est de relier directement les erreurs de la boucle d'air avec la correction à appliquer sur la commande de fuel via des paramètres $(K_p, K_T, K_X, K_M)$ qui sont entièrement calculable car tout est parfaitement connu (ils ne dépendent que des fonctions $f$, $k$, des valeurs de références $P_{ref}$, $T_{ref}$, $X_{ref}$ et $M_{ref}$ et d'un certain nombre de constantes connues).

En appliquant la correction précédente sur l'angle d'injection, on peut alors assurer (au premier ordre) que l'angle $CA_y$ soit à sa valeur de référence (choix des coefficients de linéarisation $\beta_{inj}, \beta_M, \beta_X, \beta_{soc}$).

Petit à petit, la boucle d'air va amener les erreurs $dP, dT, dM$ et $dX$ vers zéro, la correction va donc disparaître dans les phases statiques stabilisées. La stratégie de contrôle est schématisée sur la figure 4. Cette figure illustre un schéma du calcul de la correction $d\theta_{inj}$ de l'angle d'injection du carburant. Après avoir estimé (*EST-ACT*) les valeurs réelles de $P_{IVC}$, $T_{IVC}$, $M_{IVC}$ et $X_{IVC}$, déterminé (*DET-CONS*) les valeurs de consignes $P_{ref}$, $T_{ref}$, $X_{ref}$, $M_{ref}$ et $(\theta_{inj})_{ref}$, on calcule les différences (*CAL-DIF*) $dP$, $dT$, $dM$ et $dX$. Ensuite, on calcule les coefficients de linéarisation (*CAL-COEF*) $\kappa_P, \kappa_T, \kappa_X, \kappa_M$ en accord avec les deux modèles de combustion choisis. Enfin, on calcule la correction (*CAL-COR*) $d\theta_{inj}$ :

$$d\theta_{inj} = \kappa_P dP + \kappa_X dX + \kappa_M dM + \kappa_T dT$$

**ANNEXE 1**

**Expression des coefficients de linéarisation**

$$(\alpha_{inj}, \alpha_P, \alpha_T, \alpha_X)$$

On a:

$$d\theta_{soc} = \alpha_{inj}d\theta_{inj} + \alpha_P dP + \alpha_T dT + \alpha_X dX \qquad (3)$$

Avec:

$$
\left\{
\begin{aligned}
\alpha_P &= -\frac{\left(\int_{(\theta_{inj})_{ref}}^{(\theta_{soc})_{ref}} \frac{\partial f}{\partial P}(P_{ref},T_{ref},X_{ref},N_e,\theta)\,d\theta\right)}{f(P_{ref},T_{ref},X_{ref},N_e,(\theta_{soc})_{ref})} \\
&= -\frac{n}{P_{ref}} \cdot \frac{1}{f(P_{ref},T_{ref},X_{ref},N_e,(\theta_{soc})_{ref})} \\[2em]
\alpha_T &= -\frac{\left(\int_{(\theta_{inj})_{ref}}^{(\theta_{soc})_{ref}} \frac{\partial f}{\partial T}(P_{ref},T_{ref},X_{ref},N_e,\theta)\,d\theta\right)}{f(P_{ref},T_{ref},X_{ref},N_e,(\theta_{soc})_{ref})} \\
&= -\frac{\frac{T_A}{T_{IVC}^2}\left(\int_{(\theta_{inj})_{ref}}^{(\theta_{soc})_{ref}} f(P_{ref},T_{ref},X_{ref},N_e,\theta).v^{1-\gamma}(\theta)\,d\theta\right)}{f(P_{ref},T_{ref},X_{ref},N_e,(\theta_{soc})_{ref})} \\[2em]
\alpha_X &= -\frac{\left(\int_{(\theta_{inj})_{ref}}^{(\theta_{soc})_{ref}} \frac{\partial f}{\partial X}(P_{ref},T_{ref},X_{ref},N_e,\theta)\,d\theta\right)}{f(P_{ref},T_{ref},X_{ref},N_e,(\theta_{soc})_{ref})} \\
&= \frac{\left(\frac{C_2}{C_1+C_2 X_{ref}} - \left(\int_{(\theta_{inj})_{ref}}^{(\theta_{soc})_{ref}} f(P_{ref},T_{ref},X_{ref},N_e,\theta).\ln(v(\theta))\left[n+\frac{T_A}{T_{IVC}}v^{1-\gamma}(\theta)\right]d\theta\right).\frac{d\gamma}{dX}(T_{ref},X_{ref})\right)}{f(P_{ref},T_{ref},X_{ref},N_e,(\theta_{soc})_{ref})} \\[2em]
\alpha_{inj} &= \frac{f(P_{ref},T_{ref},X_{ref},N_e,(\theta_{inj})_{ref})}{f(P_{ref},T_{ref},X_{ref},N_e,(\theta_{soc})_{ref})} \\[2em]
et &\left\{
\begin{aligned}
f(P_{ref},T_{ref},X_{ref},N_e,\theta) &= \frac{1}{6N_e}\frac{A}{C_1+C_2 X_{ref}}.P_{ref}^{\ n}.v^{\gamma.n}(\theta)\exp\left(\frac{T_A}{T_{ref}}.v^{1-\gamma}(\theta)\right) \\
v(\theta) &= \frac{V_{IVC}}{V(\theta)}
\end{aligned}
\right.
\end{aligned}
\right.
$$

## ANNEXE 2

**Expression des coefficients de linéarisation**

$$(\beta_{inj}, \beta_M, \beta_X, \beta_{soc}.)$$

On a:

$$\beta_{inj}d\theta_{inj} + \beta_M dM + \beta_X dX + \beta_{soc}d\theta_{soc} = 0 \qquad (4)$$

avec

$$
\begin{cases}
\beta_{inj} &= \dfrac{C_{mode}}{Q_{LHV}}h(X_{IVC})\int_{(\theta_{soc})_{ref}}^{(CA)_{ref}}\dfrac{\partial \exp\left(C_{rate}\dfrac{\sqrt{k(\theta,(\theta_{inj})_{ref},M_f,(M_{IVC})_{ref})}}{\sqrt[3]{V_{cyl}(\theta)}}\right)}{\partial\theta_{inj}}d\theta \\[4mm]
&= \dfrac{C_{diss}}{2}\dfrac{C_{mode}}{6N_eQ_{LHV}}h(X_{IVC})C_{rate}\int_{(\theta_{soc})_{ref}}^{(CA)_{ref}}\dfrac{\sqrt{k(\theta,(\theta_{inj})_{ref},M_f,(M_{IVC})_{ref})}}{\sqrt[3]{V_{cyl}(\theta)}}\exp\left(C_{rate}\dfrac{\sqrt{k(\theta,(\theta_{inj})_{ref},M_f,(M_{IVC})_{ref})}}{\sqrt[3]{V_{cyl}(\theta)}}\right)d\theta \\[6mm]
\beta_M &= \dfrac{C_{mode}}{Q_{LHV}}h(X_{IVC})\int_{(\theta_{soc})_{ref}}^{(CA)_{ref}}\dfrac{\partial \exp\left(C_{rate}\dfrac{\sqrt{k(\theta,(\theta_{inj})_{ref},M_f,(M_{IVC})_{ref})}}{\sqrt[3]{V_{cyl}(\theta)}}\right)}{\partial M_{IVC}}d\theta \\[4mm]
&= -\dfrac{C_{mode}}{Q_{LHV}}\dfrac{h(X_{IVC})}{2(M_{IVC}+M_f)}C_{rate}\int_{(\theta_{soc})_{ref}}^{(CA)_{ref}}\dfrac{\sqrt{k(\theta,(\theta_{inj})_{ref},M_f,(M_{IVC})_{ref})}}{\sqrt[3]{V_{cyl}(\theta)}}\exp\left(C_{rate}\dfrac{\sqrt{k(\theta,(\theta_{inj})_{ref},M_f,(M_{IVC})_{ref})}}{\sqrt[3]{V_{cyl}(\theta)}}\right)d\theta \\[6mm]
\beta_X &= \dfrac{C_{mode}}{Q_{LHV}}\int_{(\theta_{soc})_{ref}}^{(CA)_{ref}}\dfrac{\partial h(X_{IVC})}{\partial X_{IVC}}\exp\left(C_{rate}\dfrac{\sqrt{k(\theta,(\theta_{inj})_{ref},M_f,(M_{IVC})_{ref})}}{\sqrt[3]{V_{cyl}(\theta)}}\right)d\theta \\[4mm]
&= \dfrac{h'(X_{IVC})}{h(X_{IVC})}\ln(1-\dfrac{y}{100}) \\[4mm]
\beta_{soc} &= -\exp\left(C_{rate}\dfrac{\sqrt{k((\theta_{soc})_{ref},(\theta_{inj})_{ref},M_f,(M_{IVC})_{ref})}}{\sqrt[3]{V_{cyl}((\theta_{soc})_{ref})}}\right) \\[6mm]
et \quad & k(\theta,\theta_{inj},M_f,M_{IVC}) = C_{turb}\dfrac{k_0(M_f,N_e)}{M_{IVC}+M_f}e^{\frac{C_{diss}(\theta-\theta_{inj})}{6N_e}}
\end{cases}
$$

**ANNEXE 3**

**Intégrale De Knock**

Le début de la combustion ne se fait pas immédiatement après l'injection de fuel. Il y a un délai d'auto inflammation qui se modélise sous la forme de l'intégrale de Knock. Celle-ci relie de manière implicite l'angle d'injection et l'angle de début de combustion :

$$\int_{\theta_{inj}}^{\theta_{soc}} g(P(\theta),T(\theta),X,N_e)\,d\theta = 1 \quad \text{Avec} \quad g(P,T,X,N_e) = \dfrac{1}{N_e}\dfrac{A}{C_1+C_2X}.P^n.\exp\left(-\dfrac{T_A}{T}\right)$$

-   $\theta$ est l'angle du vilebrequin.

-   $A,C_1,C_2,n$ et $T_A$ sont des paramètres fixes et connus du modèle.

- $N_e$ le régime moteur.

Exemple de jeu de paramètre:

| Paramètre | A | $C_1$ | $C_2$ | n | $T_A$ |
|---|---|---|---|---|---|
| Unité | $(hPa)^{-n} s^{-1}$ | 1 | 1 | 1 | °K |
| Valeur | 0.22 | 1 | 10.5 | 1.13 | 1732 |

En considérant que le mélange gazeux est parfait et est soumis à une compression adiabatique, on a, avant le début de la combustion :

- $P(\theta).V(\theta)\gamma = cste \Rightarrow P(\theta) = P_{IVC}.v\gamma(\theta)$

- $T(\theta).V(\theta)\gamma^{-1} = cste \Rightarrow T(\theta) = T_{IVC}.v\gamma^{-1}(\theta)$

Avec :

- $$v(\theta) = \frac{V_{IVC}}{V(\theta)}$$ : fonction du volume entièrement connue.

- $V_{IVC}$ : le volume de la chambre à la fermeture des soupapes.

- $V(\theta)$ : le volume de la chambre en fonction de l'angle du vilebrequin.

- $\gamma(X)$ : paramètre de compression adiabatique. Il dépend notamment de la composition chimique $X$.

- X : La composition n'évolue pas dans le cylindre. Celle-ci est donc égale à la composition au moment de la fermeture soupape admission: $X = X_{IVC}$.

On obtient donc au final l'équation générale suivante :

$$\int_{\theta_{inj}}^{\theta_{soc}} f(P_{IVC},T_{IVC},X_{IVC},N_e,\theta)\,d\theta = 1$$

avec

$$f(P_{IVC},T_{IVC},X_{IVC},N_e,\theta) = \frac{1}{6N_e}\frac{A}{C_1+C_2X_{IVC}}.P_{IVC}^{\,n}.v^{\gamma(X_{IVC}).n}(\theta)\exp\left(-\frac{T_A}{T_{IVC}}.v^{1-\gamma(X_{IVC})}(\theta)\right)$$

## ANNEXE 4

### Obtention de la densité d'énergie cinétique turbulente

En combustion diesel à injection directe, il est courant de considérer que l'énergie cinétique turbulente est majoritairement due à l'injection de carburant (de l'ordre de 95%). La densité d'énergie cinétique turbulente k a donc une évolution gouvernée par l'équation différentielle suivante:

$$\begin{cases} \dfrac{dk}{d\theta} = -\dfrac{C_{diss}}{6N_e} k + \dfrac{C_{turb}}{M_f + M_{ivc}} \dfrac{dE_{cin}}{d\theta} \\[2ex] \dfrac{dE_{cin}}{d\theta} = C_D(N_e).D_{carb}^{\ 3} \end{cases}$$

avec:

- $C_D(Ne)$ une fonction qui dépend du régime (donc considérée comme constante).

- $C_{turb}$ est une constante.

- $D_{carb}$ est le débit de carburant instantané. Il dépend de la masse injectée (qui détermine la durée et le profil du débit de carburant). De plus, si on décale l'injection dans le temps, on ne fait que décaler ce profil. Le débit de carburant ne dépend donc que de $M_f$ et de l'intervalle de temps entre l'instant présent (angle vilebrequin $\theta$) et l'injection (angle vilebrequin $\theta_{inj}$). Ce qui donne: $D_{carb} = D_{carb}\left(M_f, \dfrac{\theta - \theta_{inj}}{N_e}\right)$.

Exemple de jeu de paramètre:

| Paramètre | $C_{turb}$ | $C_{diss}$ | $C_D(Ne)$ |
|-----------|-----------|-----------|-----------|
| Unité | [-] | $s^{-1}$ | $m^2 kg^{-2}$ |
| Valeur | 1 | 200 | $9e^{-6}/Ne(rpm)$ |

L'équation différentielle du premier ordre peut s'intégrer avec la méthode de variation de la constante:

$$k(\theta) = \frac{k_0(M_f, \theta, \theta_{inj}, N_e)}{M_f + M_{IVC}} e^{-\frac{C_{diss}}{N_e}(\theta - \theta_{inj})}$$

avec

$$k_0(M_f, \theta, \theta_{inj}, N_e) = C_{turb} \int_{\theta_{inj}}^{\theta} C_D(N_e) D_{carb}\left(M_f, \frac{z - \theta_{inj}}{N_e}\right)^3 e^{\frac{C_{diss}}{Ne}(z - \theta_{inj})} dz$$

L'intégrale ci dessus a un intégrande non nul uniquement pendant l'injection (en dehors, le débit de carburant est nul). Si on appelle $\Delta\theta_{inj}$ la durée de l'injection, on a donc

$$\forall \theta > \theta_{inj} + \Delta\theta_{inj}, \quad k_0(M_f, \theta, \theta_{inj}, N_e) = C_{turb} C_D(N_e). \int_{\theta_{inj}}^{\theta_{inj} + \Delta\theta_{inj}} D_{carb}\left(M_f, \frac{z - \theta_{inj}}{N_e}\right)^3 e^{\frac{C_{diss}}{Ne}(z - \theta_{inj})} dz$$

On s'intéresse à l'expression de k pendant la combustion (car k intervient uniquement dans l'expression du dégagement d'énergie). Or on a fait l'hypothèse que l'injection était finie lorsque la combustion commence. Donc

$$\forall \theta > \theta_{soc} > \theta_{inj} + \Delta\theta_{inj}, \quad k_0(M_f,\theta,\theta_{inj},N_e) = C_{turb}C_D(N_e).\int_{\theta_{inj}}^{\theta_{inj}+\Delta\theta_{inj}} D_{carb}\left(M_f,\frac{z-\theta_{inj}}{N_e}\right)^3 e^{\frac{C_{diss}(z-\theta_{inj})}{Ne}}dz$$

$$= C_{turb}C_D(N_e).\int_0^{\Delta\theta_{inj}} D_{carb}\left(M_f,\frac{z}{N_e}\right)^3 e^{\frac{C_{diss}}{Ne}z}dz = cste$$

Donc, pendant la combustion, $k_0$ dépend de la manière dont le carburant est injecté (profil de $D_{carb}$) mais ne dépend pas directement de $\theta_{inj}$ ni de $\theta$. Donc:

$$k(\theta) = \frac{k_0(M_f,N_e)}{M_f + M_{IVC}} e^{-\frac{C_{diss}}{N_e}(\theta-\theta_{inj})}$$

avec

$$k_0(M_f,N_e) = C_{turb}C_D(N_e).\int_0^{\Delta\theta_{inj}} D_{carb}\left(M_f,\frac{z}{N_e}\right)^3 e^{\frac{C_{diss}}{Ne}z}dz$$

**ANNEXE 5**

**Dégagement d'énergie**

Pendant la combustion, le dégagement d'énergie se fait selon la loi:

$$\frac{dQ}{d\theta} = C_{mode}\left(M_f - \frac{Q}{Q_{LHV}}\right)\exp\left(C_{rate}\frac{\sqrt{k(\theta)}}{\sqrt[3]{V_{cyl}(\theta)}}\right)h(X_{IVC})$$

Exemple de jeu de paramètre

| Paramètre | $C_{mode}$ | $Q_{LHV}$ | $C_{rate}$ |
|---|---|---|---|
| Unité | kJ.kg$^{-1}$deg$^{-1}$ | kJ.kg$^{-1}$ | s |
| Valeur | 350 | 42789 | 1,5e$^{-3}$ |

Si on appelle $x$ la fraction de masse de fuel consommée. On a la relation classique suivante, qui lie l'énergie libérée $Q$, l'énergie chimique totale contenue dans le carburant $M_fQ_{LHV}$ et x : $Q = xM_fQ_{LHV}$
Au final en reportant la deuxième équation dans la première, on a la relation:

$$dx = \frac{C_{mode}}{Q_{LHV}}(1-x)\exp\left(C_{rate}\frac{\sqrt{k(\theta)}}{\sqrt[3]{V_{cyl}(\theta)}}\right)h(X_{IVC})d\theta$$

$$\Leftrightarrow \frac{dx}{(1-x)} = \frac{C_{mode}}{Q_{LHV}}\exp\left(C_{rate}\frac{\sqrt{k(\theta)}}{\sqrt[3]{V_{cyl}(\theta)}}\right)h(X_{IVC})d\theta$$

Le $CA_y$ est l'angle vilebrequin auquel y% du carburant a été consommé. Il correspond donc à $x = \dfrac{y}{100}$. On peut donc intégrer séparément les deux membres de la dernière équation 100 pour obtenir une relation implicite entre le $CA_y$ et le début de combustion $\theta_{soc}$:

$$\int_0^{\frac{y}{100}} \frac{dx}{(1-x)} = -\ln(1 - \frac{y}{100}) = h(X_{IVC}) \int_{\theta_{soc}}^{CA_y} \frac{C_{mode}}{Q_{LHV}} \exp\left( C_{rate} \frac{\sqrt{k(\theta)}}{\sqrt[3]{V_{cyl}(\theta)}} \right) d\theta$$

## Revendications

1. Procédé de contrôle de combustion d'un moteur à allumage par compression, dans lequel: - on détermine des valeurs de consigne de paramètres physiques liés à l'admission de comburant gazeux dans une chambre de combustion, ainsi qu'une valeur de consigne $(\theta_{inj})_{ref}$ d'un angle vilebrequin auquel un carburant doit être injecté dans la chambre de combustion, lesdites valeurs de consigne étant déterminées de façon à optimiser la combustion, - un système de contrôle moteur pilote des actionneurs de façon à ce que les valeurs desdits paramètres physiques soient égales auxdites valeurs de consigne, **caractérisé en ce que** le procédé comporte les étapes suivantes :

   - on corrige la valeur de consigne $(\theta_{inj})_{ref}$ avant que lesdits paramètres physiques n'atteignent leurs valeurs de consigne, en calculant une correction $d\theta_{inj}$ à appliquer à la dite valeur de consigne $(\theta_{inj})_{ref}$, de façon à ce qu'un angle vilebrequin $CA_y$, auquel $y$ pour cent du carburant est consommé lors de la combustion, soit égale à une valeur de référence de cet angle pour une combustion optimisée ;
   - ledit système de contrôle moteur pilote une injection de carburant dans la chambre de combustion lorsque l'angle vilebrequin est égal à ladite valeur corrigée de consigne $(\theta_{inj})_{ref}$ afin de conserver la combustion optimale.

2. Procédé selon la revendication 1, dans lequel on détermine ladite correction $d\theta_{inj}$ en tenant compte des différences entre des valeurs réelles desdits paramètres physiques et lesdites valeurs de consignes desdits paramètres physiques, et en contrôlant l'angle vilebrequin $CA_y$ au moyen d'une modélisation de la combustion comportant un premier modèle pour modéliser un phénomène d'auto inflammation, et un second modèle pour modéliser un dégagement d'énergie en fonction de l'angle vilebrequin $CA_y$.

3. Procédé selon la revendication 2, dans lequel on détermine ladite correction $d\theta_{inj}$ en appliquant les étapes suivantes :

   - on détermine lesdites valeurs réelles desdits paramètres physiques ;
   - on calcule lesdites différences entre lesdites valeurs réelles et lesdites valeurs de consignes ;
   - on calcule des premiers coefficients de linéarisation en linéarisant au premier ordre ledit premier modèle ;
   - on calcule des seconds coefficients de linéarisation en linéarisant au premier ordre ledit second modèle, et en considérant que l'angle vilebrequin $CA_y$ est égale à ladite valeur de référence ; et
   - on calcule la correction $d\theta_{inj}$ au moyen d'une combinaison linéaire desdites différences, les coefficients de ladite combinaison linéaire étant définis à partir des premiers et seconds coefficients de linéarisation.

4. Procédé selon l'une des revendications précédentes, dans lequel lesdits paramètres physiques sont choisis parmi au moins les paramètres suivants au moment de la fermeture soupape: pression dans la chambre de combustion ($P_{IVC}$), température dans la chambre de combustion ($T_{IVC}$), rapport ($X_{IVC}$) entre une masse de gaz brûlés et une masse de gaz totale dans la chambre de combustion, et masse ($M_{IVC}$) de gaz totale dans le cylindre.

## Claims

1. A method of controlling the combustion of α compression ignition engine, wherein: - setpoint values are determined for physical parameters related to the intake of gaseous oxidizer in α combustion chamber, as well as α setpoint value $(\theta_{inj})_{ref}$ for a crank angle at which a fuel has to be injected into the combustion chamber, said setpoint values being determined so as to optimize combustion, - an engine control system controls actuators in such a way that the values of said physical parameters are equal to said setpoint values, **characterized in that** the method comprises the following stages:

- correcting setpoint value $(\theta_{inj})_{ref}$ before said physical parameters reach their setpoint values, by calculating a correction $d\theta_{inj}$ to be applied to said setpoint value $(\theta_{inj})_{ref}$ so that a crank angle CAγ at which y per cent of the fuel is consumed during combustion is equal to a reference value of this angle for an optimized combustion,
- said engine control system controls a fuel injection into the combustion chamber when the crank angle is equal to said corrected setpoint value $(\theta_{inj})_{ref}$ in order to keep an optimum combustion.

**2.** A method as claimed in claim 1, wherein said correction $d\theta_{inj}$ is determined by taking account of the differences between real values of said physical parameters and said setpoint values of said physical parameters, and by controlling crank angle $CA_y$ by combustion modelling comprising a first model for modelling an auto-ignition phenomenon and a second model for modelling an energy release as a function of crank angle $CA_y$.

**3.** A method as claimed in claim 2, wherein said correction $d\theta_{inj}$ is determined by applying the following stages:

- determining said real values of said physical parameters,
- calculating said differences between said real values and said setpoint values,
- calculating first linearization coefficients by linearizing said first model to the first order,
- calculating second linearization coefficients by linearizing said second model to the first order and by considering that crank angle $CA_y$ is equal to its reference value, and
- calculating correction $d\theta_{inj}$ by means of a linear combination of said differences, the coefficients of said linear combination being defined from the first and second linearization coefficients.

**4.** A method as claimed in any one of the previous claims, wherein said physical parameters are selected from among at least the following parameters upon valve closing: pressure in the combustion chamber ($P_{IVC}$), temperature in the combustion chamber ($T_{IVC}$), ratio ($X_{IVC}$) between a burnt gas mass and a total gas mass in the combustion chamber, and total gas mass ($M_{IVC}$) in the cylinder.

**Patentansprüche**

**1.** Verfahren zur Steuerung der Verbrennung eines Kompressionszündungsmotors, wobei: - Sollwerte von physikalischen Parametern, die mit dem Einlass von gasförmigem Oxidationsmittel in einen Brennraum zusammenhängen, sowie ein Sollwert $(\theta_{inj})_{ref}$ eines Kurbelwellenwinkels, bei dem ein Kraftstoff in den Brennraum eingespritzt werden muss, bestimmt werden, wobei diese Sollwerte derart bestimmt werden, dass die Verbrennung optimiert wird; - ein Motorsteuerungssystem Aktuatoren derart vorsteuert, dass die Werte der physikalischen Parameter gleich den Sollwerten sind, **dadurch gekennzeichnet, dass** das Verfahren die folgenden Schritte aufweist:

- es wird der Sollwert $(\theta_{inj})_{ref}$, bevor die physikalischen Parameter ihre Sollwerte erreichen, korrigiert, indem eine auf diesen Sollwert $(\theta_{inj})_{ref}$ anzuwendende Korrektur $d\theta_{inj}$ derart berechnet wird, dass ein Kurbelwellenwinkel $CA_y$, bei dem $y$ Prozent des Kraftstoffs bei der Verbrennung verbraucht sind, gleich einem Referenzwert dieses Winkels für eine optimierte Verbrennung ist;
- das Motorsteuerungssystem steuert eine Einspritzung von Kraftstoff in den Brennraum vor, wenn der Kurbelwellenwinkel gleich dem korrigierten Sollwert $(\theta_{inj})_{ref}$ ist, um die optimale Verbrennung beizubehalten.

**2.** Verfahren nach Anspruch 1, wobei die Korrektur $d\theta_{inj}$ unter Berücksichtigung der Differenzen zwischen Istwerten der physikalischen Parameter und den Sollwerten dieser physikalischen Parameter bestimmt wird, und indem der Kurbelwellenwinkel $CA_y$ mittels einer Modellierung der Verbrennung gesteuert wird, welche ein erstes Modell zum Modellieren einer Erscheinung der Selbstzündung und ein zweites Modell zum Modellieren einer Freisetzung von Energie in Abhängigkeit von dem Kurbelwellenwinkel $CA_y$ aufweist.

**3.** Verfahren nach Anspruch 2, wobei die Korrektur $d\theta_{inj}$ unter Anwendung der folgenden Schritte bestimmt wird:

- es werden die Istwerte der physikalischen Parameter bestimmt;
- es werden die Differenzen zwischen den istwerten und den Sollwerten berechnet;
- es werden erste Linearisierungskoeffizienten berechnet, indem eine Linearisierung erster Ordnung des ersten Modells durchgeführt wird;
- es werden zweite Linearisierungskoeffizienten berechnet, indem eine Linearisierung erster Ordnung des zweiten Modells durchgeführt wird und indem angenommen wird, dass der Kurbelwellenwinkel $CA_y$ gleich dem Referenzwert ist; und

- es wird die Korrektur $d\theta_{inj}$ mittels einer Linearkombination der Differenzen berechnet, wobei die Koeffizienten dieser Linearkombination ausgehend von den ersten und zweiten Linearisierungskoeffizienten definiert werden.

4. Verfahren nach einem der vorhergehenden Ansprüche, wobei die physikalischen Parameter aus wenigstens den folgenden Parametern zum Zeitpunkt des Schließens des Ventils ausgewählt sind: Druck im Brennraum ($P_{IVC}$), Temperatur im Brennraum ($T_{IVC}$), Verhältnis ($X_{IVC}$) zwischen einer Masse verbrannter Gase und einer Gesamtgasmasse im Brennraum und Gesamtgasmasse ($M_{IVC}$) im Zylinder.

**Fig. 1**

**Fig. 2**

**Fig. 3**

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. BENGTSSON ; P. STRANDH ; R. JOHANSSON ; P. TUNESTAL ; B. JOHANSSON.** Control of Homogeneous Charge Compression Ignition (HCCI) Engine Dynamics. *Proceeding of the 2004 American Control Conference,* 30 Juin 2004

- **J. BENGTSSON et al.** Model Predictive Control of Homogeneous Charge Compression Ignition (HCCI) Engine Dynamics. *Control Applications, 2006 IEEE International Conference on, IEEE,* 01 Octobre 2006, 1675-1680